# EUROPEAN PATENT SPECIFICATION

(11) **EP 3 677 444 B1**
(45) Date of publication and mention of the grant of the patent: **16.11.2022**
(21) Application number: 19215477.1
(22) Date of filing: 12.12.2019
(51) Int. Cl.: B60C 15/04

(54) **LIGHTWEIGHT BEAD FOR A TIRE**
LEICHTGEWICHTIGER WULST FÜR EINEN REIFEN
TALON LÉGER POUR UN PNEU

(30) Priority: 14.12.2018 US 201816220061
(43) Date of publication of application: 08.07.2020
(73) Proprietor: The Goodyear Tire & Rubber Company, Akron, OH 44316 (US)
(72) Inventor: ENDRES, Paul Joseph, Brecksville, Ohio 44141 (US); CELIK, Ceyhan, Stow, Ohio 44224 (US); GILLICK, James Gregory, Akron, Ohio 44313 (US); REITER, Leonard James, Ravenna, Ohio 44266 (US); KISH, James Christopher, New Franklin, Ohio 44319 (US)
(74) Representative: Kutsch, Bernd

(56) References cited:
- WO-A1-2013/182597
- WO-A1-2013/182599
- JP-A- H0 478 703

## Description

### Field of Invention

The present invention relates to beads for tires, and, in particular, to lightweight hybrid beads for pneumatic tires, such as aircraft tires.

### Background of the Present Invention

Conventionally, a tire comprises two circumferential beads that are intended to allow the tire to be fitted on the rim. Each bead may include an annular reinforcing bead core. A conventional tire for a ground vehicle may include a bead including a core and an outer layer of one or more steel wires wound around the core. The core may be a steel monofilament. The steel monofilament may bend around on itself with its two ends welded together in order to form an approximately circular ring or hoop.

In addition to a relatively high weight, such a bead may also exhibit plastic deformation. Thus, after steps of transport and/or storage, during which the tire is squashed under its own weight or under the weight of other tires, the bead may exhibit irreversible plastic deformation. Such deformation may degrade the mechanical properties of the bead, resulting in inadequate clamping of the bead to the rim. Consequently, airtightness and other performance of the tire may be degraded.

Another conventional bead for a tire may include a core of at least one yarn of a multifilament textile fiber embedded in an organic matrix and an outer layer of at least one metal wire wound around, and in contact with, the core. By definition, a textile fiber is non-metallic. A multifilament textile fiber may include elementary textile filaments that are arranged side by side and oriented in a substantially unidirectional manner. The elementary filaments are thus more or less parallel to one another, apart from the occasional overlap.

The textile fiber may reinforce the organic matrix. Such a fiber may be chosen, for example, from the group consisting of polyvinyl alcohol fibers, aromatic polyamide (or "aramid") fibers, polyester fibers, aromatic polyester fibers, polyethylene fibers, cellulose fibers, rayon fibers, viscose fibers, polyphenylene benzobisoxazole ("PBO") fibers, polyethylene naphthenate ("PEN") fibers, glass fibers, carbon fibers, silica fibers, ceramic fibers, and mixtures of such fibers.

The organic matrix may be any matrix including, by weight, more than 50 percent organic material. The organic matrix may contain minerals and/or metals that come from its manufacturing process, but also deliberately added mineral and/or metal additives. Thus, the organic matrix may be a thermosetting polymeric matrix, for example, based on an unsaturated polyester, polyepoxide, a phenolic derivative, and/or aminoplast, or else a thermostable polymeric matrix based on cyanate, poly(bismaleimide), polyimide, polyamidoimide, or a thermoplastic polymeric matrix based on polypropylene, polyamide, saturated polyester, polyoxymethylene, polysulphone and polyethersulphone, polyether ketone and polyether ether ketone, polyphenylene sulphide, and/or polyetherimide, or a thermoplastic or crosslinked elastomer based on polyurethane, silicone, and/or rubber or even an organic matrix that results from a mixture of these matrices.

The organic matrix may be thermoset and crosslinked. For example, a resin that is crosslinkable by ionizing radiation, such as ultraviolet-visible radiation and/or a beam of accelerated electrons or X rays. A composition including a resin that is crosslinkable by a peroxide may also be chosen. The crosslinkable resin may be made of a polyester resin (i.e. based on unsaturated polyester) or a vinyl ester resin.

The core may include a single yarn and form a monolithic torus. The term "monolithic" may mean that the torus has no discontinuities of material or joints on a macroscopic scale. Elementary filaments may be distributed homogeneously throughout the volume of the torus. Alternatively, the core may form a winding of the yarn in a number of coils and include a plurality of separate yarns. The yarns may be assembled by cabling, such as wound together in a helix without a twist about their own axis. The yarns may also be assembled by twisting, such as wound together in a helix and undergoing both a collective twist and an individual twist about their own axis. Further, the core may include a plurality of monolithic torusses juxtaposed parallel to one another.

WO 2013/182599 describes a bead for an aircraft tire in accordance with the preamble of claim 1.

### Definitions

The following definitions are controlling for the present invention.

"Axial" and "Axially" means the lines or directions that are parallel to the axis of rotation of the tire.

"Radial" and "radially" mean directions radially toward or away from the axis of rotation of the tire.

"Saturated" means not enough room between adjacent primary windings of a cable such that additional windings cannot be wound between the primary windings.

### Summary of the Invention

The invention relates to a bead in accordance with claim 1 and to a tire in accordance with claim 15.

Dependent claims refer to preferred embodiments of the invention.

In a preferred aspect of the invention, the bead comprises a core including at least one yarn of multiple textile or non-metal filaments embedded in an organic matrix having a density in a range of from 0.5 g/cm³ to 2.00 g/cm³, alternatively from 0.9 g/cm³ to 2.00 g/cm³, the core having a diameter in a range of from 5.0 mm to 30.0 mm, alternatively in a range of from 5.0 mm to 20.0 mm, and an outer sheath layer including at least one metal wire wound around and in contact with the core.

In one preferred aspect of the invention, the core includes or consists of a single yarn of the multiple textile or non-metal filaments.

In another preferred aspect of the invention, the core includes or consists a plurality of separate yarns of the multiple textile or non-metal filaments.

In a preferred aspect of the invention, wherein each yarn of the multiple textile or non-metal filaments. has a yield strength greater than 2000 MPa or in a range of from 2000 MPa to 2500 MPa.

In a preferred aspect of the invention, each yarn of the multiple textile or non-metal filaments. has a Young's modulus less than or equal to 300 GPa.

In a preferred aspect of the invention, a ratio of a mass of the core to a mass of the entire bead is less than 0.6 or in a range of from 0.4 to 0.6 or in a range of from 0.45 to 0.55

In a preferred aspect of the invention, the ratio of the force at break of the core to the force at break of the entire bead is greater than or equal to 0.25.

In a preferred aspect of the invention, a contribution of the core to a force at break of the entire bead is between 5 percent and 60 percent, preferably between 5 percent and 30 percent, between 20 percent and 40 percent, between 25 percent and 35 percent, between 15 percent and 25 percent, or equal to 20 percent.

In a preferred aspect of the invention, the ratio of the mass of the core to the mass of the entire bead is greater than or equal to 0.05 or greater than or equal to 0.10.

In a preferred aspect of the invention, a ratio of the diameter of the core to a diameter of the entire bead is greater than or equal to 0.4.

In a preferred aspect of the invention, the core has an ultimate break strength greater than or equal to 200 MPa or between 15 kN and 20 kN, or 17 kN and 18 kN.

In a preferred aspect of the invention, a diameter of each yarn of the multiple textile or non-metal filaments is in a range of from 0.5 mm to 6.0 mm and/or a diameter of each elementary filament of the multiple textile or non-metal filaments is in a range of from 2.0 µm to 30.0 µm.

In a preferred aspect of the invention, each filament of the yarn of multiple textile or non-metal filaments is continuous and/or each yarn of multiple textile or non-metal filaments includes more than ten elementary filaments.

In a preferred aspect of the invention, each filament of the yarn of multiple textile or non-metal filaments is chosen from a group of filaments consisting of glass filaments, carbon filaments, polyphenylene benzobisoxazole (PBO) filaments, silica filaments, ceramic filaments, and mixtures thereof; and/or each yarn of multiple textile or non-metal filaments is chosen from a group of fibers consisting of glass fibers, carbon fibers, polyphenylene benzobisoxazole (PBO), silica fibers, ceramic fibers, and mixtures thereof;

The bead is for use in a tire, preferably a pneumatic tire. Most preferably, the tire is a pneumatic aircraft tire.

According to another aspect of the invention, bead for a tire is disclosed, the bead comprising a core including at least one yarn of a multifilament textile fiber embedded in an organic matrix having a density between 0.9 g/cm³ and 2.00 g/cm³, the core having a diameter between 5.0 mm and 30.0 mm; and an outer sheath layer including at least one metal wire wound around and in contact with the core.

The core may include a plurality of separate yarns of the multifilament textile fiber.

Preferably, each yarn of the multifilament textile fiber has a yield strength between 2000 MPa and 2500 MPa.

Preferably, each yarn of the multifilament textile fiber has a Young's modulus less than or equal to 300 GPa.

Preferably, a diameter of each yarn of the multifilament textile fiber is between 0.5 mm and 6.0 mm.

Preferably, a diameter of each elementary filament of each multifilament textile fiber is between 2.0 µm and 30.0 µm.

According to yet another preferred aspect of the invention, each multifilament textile fiber is continuous.

According to still another preferred aspect of the invention, each multifilament textile fiber includes more than 10 elementary filaments.

According to still another preferred aspect of the invention, each multifilament textile fiber is chosen from a group of fibers consisting of: glass fibers, polyphenylene benzobisoxazole ("PBO"), carbon fibers, silica fibers, ceramic fibers, and mixtures thereof.

According to still another preferred aspect of the invention, the organic matrix is a thermoset type of matrix.

A tire according to a preferred aspect of the present invention includes at least one bead. Each bead includes a core that has at least one yarn of a multifilament textile fiber embedded in an organic matrix having a density between 0.9 g/cm³ and 2.0 g/cm³ and an outer layer that includes a metal wire wound around, and in contact with, the core. The core has a diameter between 5.0 mm and 30.0 mm, or 5.0 mm and 20.0 mm.

### Brief Description of the Drawings

The present invention will be better understood on reading the following description, which is given solely by way of nonlimiting example, with reference to the drawings, in which:
FIG. 1 is a schematic cross-sectional view of a tire for use with the present invention;
FIG. 2 is a schematic cross-sectional view of a bead according to one example of the present invention; and
FIG. 3 is a schematic cross-sectional view of a bead according to one example of the present invention.

### Description of Example Embodiments of the Present Invention

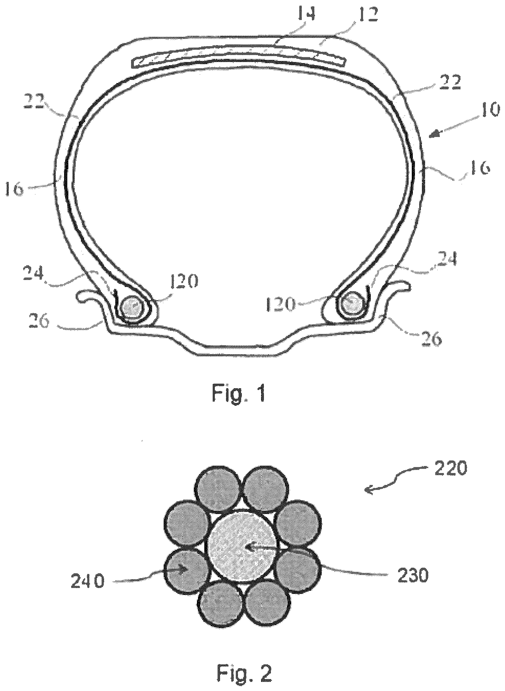

FIG. 1 shows a tire 10, pneumatic or non-pneumatic, for use with the present invention. As an example, the tire 10 is a pneumatic tire for an aircraft.

The tire 10 has a crown 12 reinforced by a crown reinforcement, or belt structure 14, two sidewalls 16, and two annular beads 120. The crown 12 is surmounted by a tread, not shown in this schematic Figure. A carcass reinforcement 22 is wound around the two beads 120 and preferably includes a turn-up 24 disposed towards the outside of each bead 120 fitted onto a wheel rim 26. The carcass reinforcement 22 preferably includes at least one ply reinforced with radial cords. Each bead 120 has a toroidal overall shape preferably with an approximately circular cross section (see FIGS. 2-3). Alternatively, the bead 120 may have a square, rectangular, hexagonal, and/or other polygon cross section or an elliptical or oblong cross section (not shown).

As shown in FIG. 2, the bead 220 includes a core 230 and an outer sheath layer 240. The bead core 230 has a circular cross-section and a single core. The bead core 230 includes a single yarn forming a monolithic torus. The core 230 has an approximately circular cross section and an exemplary diameter between 7.0 mm and 10.00 mm, or 8.90 mm.

The core 230 includes one yarn of multiple textile or non-metal filaments embedded in an organic matrix which may also be called a multifilament textile fiber embedded in an organic matrix.

The multifilament textile fiber of the core 230 may be a glass fiber and the organic core matrix may be a thermoset resin. The multifilament textile fiber of the core 230 may be continuous or discontinuous. The glass fiber of the core 230 may include more than 1000 elementary glass filaments arranged side by side and parallel to one another, apart from an occasional overlap.

The diameter of each elementary filament of the textile fiber of the core 230 is preferably between 2.0 µm and 30.0 µm.

The thermoset resin may be of the vinyl ester type, such as an epoxy vinyl ester. The core 230 may be manufactured by impregnation of the fiber or the yarn, such as described in US-A-3,730,678, or by injection of the organic matrix into a mold in which the fiber or yarn has previously been placed, such as described in US-B-7,032,637.

The sheath layer 240 of the bead 220 includes one or more metal wires (e.g., 1, 2, 3, 4, 5, 6, 7, 8, 9, 10 or more, etc.) preferably wound in a helix around the core 230.

The wire(s) of the sheath layer 240 are wound around, and in contact with, the core 230 and preferably have a circular cross-section with a diameter between 1.0 mm and 2.0 mm, or 1.30 mm.

Preferably, the wire(s) of the sheath layer 240 are made of a steel with a carbon content less than 0.9 percent, by weight of steel.

Preferably, the wire(s) of the sheath layer 240 are wound over one or more turns, such as between 6 and 10 turns, or 8 turns. The sheath layer 240 may "saturated." The two ends of the wire of the sheath layer 240 may be connected by means of a sleeve (not shown).

Another bead 320 for use with the present invention includes a core 330 with three coils 335, each of a single yarn. Each of the three coils 335 includes a single yarn forming three separate monolithic torusses wound (e.g. twisting, cabling. etc.) about each other. Each of the three coils 335 of the core 330 preferably has a circular cross section with an exemplary diameter between 7.0 mm and 10.0 mm, or 8.9 mm. Each of the coils 335 preferably includes a multifilament textile fiber embedded in an organic matrix or a yarn of multiple textile or non-metal filaments embedded in an organic matrix.

As described above, the multifilament textile fiber of the core 330 may be a glass fiber and the organic core matrix may be a thermoset resin. The multifilament textile fiber of the core 330 may be continuous or discontinuous. The glass fiber of the core 330 may include more than 1000 elementary glass filaments arranged side by side and parallel to one another, apart from an occasional overlap. The diameter of each elementary filament of the textile fiber of the core 330 may be between 2.0 µm and 30.0 µm.

Preferably, the thermoset resin is of the vinyl ester type, such as an epoxy vinyl ester. The core 330 may be manufactured by impregnation of the fiber or the yarn, such as described in US-A-3,730,678, or by injection of the organic matrix into a mold in which the fiber or yarn has previously been placed, such as described in US-B-7,032,637.

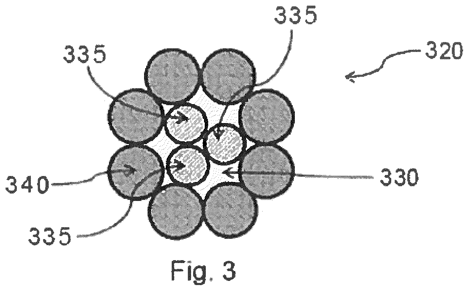

Traverse winding of each coil 335 over a number of turns may be carried out such that the core 330 has a substantially triangular cross section (FIG. 3) with a diameter of each coil between 0.5 mm and 3.0 mm, or between 1.0 mm and 2.0 mm, or 1.5 mm.

A diameter of the torus defined by the bead 320 may be between 4.0 mm and 8.0 mm, or 5.8 mm. The diameter of the torus defined by the core 330 may be between 2.0 mm and 5.0 mm, or 3.28 mm. The wire of the sheath 340 may have a diameter between 1.0 mm and 3.0 mm, or 1.5 mm.

The sheath layer 340 may include one or more metal wires (e.g., 2, 3, 4, 5, 6, 7, 8, 9, 10 or more, etc.) wound in a helix around the core 330. A single wire of the sheath layer 340 may be wound around, and in contact with, the core 330 and have a circular cross-section with a diameter between 1.0 mm and 2.0 mm, or 1.30 mm. The single wire of the sheath layer 40 may be a steel with a carbon content greater than or equal to 0.9 percent, by weight of the steel. The wire of the sheath layer 340 may be wound over one or more turns, such as between 6 and 10 turns, or 8 turns. The sheath layer 340 may "saturated." The two ends of the wire of the sheath layer 340 may be connected by means of a sleeve (not shown).

Alternatively, as shown in FIG. 3, another bead 320 for use with the present invention may include a core 330 with three coils 335, each of a single yarn. Each of the three coils 335 may include a single yarn forming three separate monolithic torusses extending parallel to each other. Each of the three coils 335 of the core 330 may have a circular cross section with an exemplary diameter between 7.0 mm and 10.0 mm, or 8.9 mm. Each of the coils 335 may include a multifilament textile fiber embedded in an organic matrix. As described above, the multifilament textile fiber may be a glass fiber and the organic core matrix may be a thermoset resin. The multifilament textile fiber may be continuous or discontinuous. The glass fiber may include more than 1000 elementary glass filaments arranged side by side and parallel to one another, apart from an occasional overlap. The diameter of each elementary filament of the textile fiber may be between 2.0 µm and 30.0 µm. The thermoset resin may be of the vinyl ester type, such as an epoxy vinyl ester. The core 30 may be manufactured by impregnation of the fiber, as described in document US-A-3,730,678, or by injection of the organic matrix into a mold in which the fiber has previously been placed, as described in US-B-7,032,637, incorporated herein by reference in its entirety.

Traverse winding of each coil 335 over a number of turns may be carried out such that the core 30 has a substantially polygonal, in this case triangular cross section (FIG. 3) with a diameter of each coil between 0.5 mm and 3.0 mm, or between 1.0 mm and 2.0 mm, or 1.5 mm. A diameter of the torus defined by the bead 320 may be between 4.0 mm and 8.0 mm, or 5.8 mm. The diameter of the torus defined by the core 330 may be between 2.0 mm and 5.0 mm, or 3.28 mm. The wire of the sheath 340 may have a diameter between 1.0 mm and 3.0 mm, or 1.5 mm.

The beads 120, 220, 320 according to the present invention may be fitted on any type of tire. For example, the bead may be intended for a tire for industrial vehicles chosen from vans, heavy vehicles (e.g., metro vehicles, buses, road transport vehicles (lorries, tractors, trailers), off-road vehicles, aircraft, agricultural, and/or construction plant machinery, and other transport or handling vehicles. Further, the characteristics of the beads 120, 220, 320 may be mixed and/or combined with one another in any suitable way compatible with one another.

In accordance with the present invention, the cores 30, 230, 330 may have a diameter between 5.0 mm and 30.0 mm, or 6.0 mm and 8.0 mm, or 7.0 mm. This larger diameter of the cores 30, 230, 330 thereby allows the further reduction of the weight of the beads 20, 220, 320 of the tire 10.

As described above, the wire of the sheaths 40, 240, 340 may have a diameter between 1.0 mm and 3.0 mm, or 1.5 mm. Aluminum generally may have a density of 2.71 g/cm³ whereas the polymeric resin system of the cores 30, 230, 330 is generally between 0.5 g/cm³ and 2.0 g/cm³, preferably between 0.9 g/cm³ and 2.0 g/cm³, or 0.9 g/cm³ and 1.8 g/cm³, or 1.74 g/cm³.

Thus, a 35 percent reduction in weight or the same sized cores may be achieved. Further, the break strength of aluminum may be 1844 Nm (1360 ft*lb) whereas the polymeric resin may be 5830 Nm (4300 ft*lb), i.e. more than three times larger.

The molding process may also provide a perfectly continuous structure with no aluminum welding, which is the current practice for aluminum core production.

## Claims

1. A bead for a tire comprising, the bead (220, 320) comprising a core (230, 330) including at least one yarn of multiple textile or non-metal filaments embedded in an organic matrix, the core having a diameter in a range of from 5.0 mm to 30.0 mm, alternatively in a range of from 5.0 mm to 20.0 mm, and an outer sheath layer (240, 340) including at least one metal wire wound around and in contact with the core (230, 330), **characterized in that** the organic matrix has a density in a range of from 0.5 g/cm³ to 2.00 g/cm³, alternatively from 0.9 g/cm³ to 2.00 g/cm³.

2. The bead as set forth in claim 1 wherein the core (230, 330) includes or consists of a single yarn of the multiple textile or non-metal filaments.

3. The bead as set forth in claim 1 wherein the core (230, 330) includes or consists a plurality of separate yarns of the multiple textile or non-metal filaments.

4. The bead as set forth in at least one of the previous claims wherein each yarn of the multiple textile or non-metal filaments. has a yield strength greater than 2000 MPa or in a range of from 2000 MPa to 2500 MPa.

5. The bead as set forth in at least one of the previous claims wherein each yarn of the multiple textile or non-metal filaments has a Young's modulus less than or equal to 300 GPa.

6. The bead as set forth in at least one of the previous claims wherein a ratio of a mass of the core (230, 330) to a mass of the entire bead (220, 320) is less than 0.6 or in a range of from 0.4 to 0.6.

7. The bead as set forth in at least one of the previous claims wherein the ratio of the force at break of the core (230, 330) to the force at break of the entire bead (220, 320) is greater than or equal to 0.25.

8. The bead as set forth in at least one of the previous claims 1 to 6 wherein a contribution of the core (230, 330) to a force at break of the entire bead (220, 320) is between 5 percent and 60 percent, preferably between 5 percent and 30 percent.

9. The bead as set forth in at least one of the previous claims wherein the ratio of the mass of the core (230, 330) to the mass of the entire bead (220, 320) is greater than or equal to 0.05.

10. The bead as set forth in at least one of the previous claims wherein a ratio of the diameter of the core (230, 330) to a diameter of the entire bead is greater than or equal to 0.4.

11. The bead as set forth in at least one of the previous claims wherein the core (230, 330) has an ultimate break strength greater than or equal to 200 MPa.

12. The bead as set forth in at least one of the previous claims wherein a diameter of each yarn of the multiple textile or non-metal filaments is in a range of from 0.5 mm to 6.0 mm and/or wherein a diameter of each elementary filament of the multiple textile or non-metal filaments is in a range of from 2.0 µm to 30.0 µm.

13. The bead as set forth in at least one of the previous claims wherein each filament of the yarn of multiple textile or non-metal filaments is continuous and/or wherein each yarn of multiple textile or non-metal filaments includes more than ten elementary filaments.

14. The bead as set forth in at least one of the previous claims wherein each filament of the yarn of multiple textile or non-metal filaments is chosen from a group of filaments consisting of glass filaments, carbon filaments, polyphenylene benzobisoxazole (PBO) filaments, silica filaments, ceramic filaments, and mixtures thereof; and/or wherein each yarn of multiple textile or non-metal filaments is chosen from a group of fibers consisting of glass fibers, carbon fibers, polyphenylene benzobisoxazole (PBO), silica fibers, ceramic fibers, and mixtures thereof.

15. A tire such as an aircraft tire (10) comprising at least one bead (220, 320) in accordance with at least one of the previous claims.

## Patentansprüche

1. Wulst für einen Reifen, umfassend die Wulst (220, 320), umfassend einen Kern (230, 330), einschließlich mindestens eines Garns aus mehreren textilen oder nichtmetallischen Filamenten, die in eine organische Matrix eingebettet sind, wobei der Kern einen Durchmesser in einem Bereich von 5,0 mm bis 30,0 mm, alternativ in einem Bereich von 5,0 mm bis 20,0 mm aufweist, und eine äußere Hüllenschicht (240, 340), einschließlich mindestens einen um den Kern (230, 330) gewickelten und mit diesem in Berührung gebrachten Metalldraht, **dadurch gekennzeichnet, dass** die organische Matrix eine Dichte in einem Bereich von 0,5 g/cm³ bis 2,00 g/cm³, alternativ von 0,9 g/cm³ bis 2,00 g/cm³ aufweist.

2. Wulst nach Anspruch 1, wobei der Kern (230, 330) ein einzelnes Garn aus den mehreren textilen oder nichtmetallischen Filamenten einschließt oder daraus besteht.

3. Wulst nach Anspruch 1, wobei der Kern (230, 330) eine Vielzahl von getrennten Garnen aus den mehreren textilen oder nichtmetallischen Filamenten einschließt oder daraus besteht.

4. Wulst nach mindestens einem der vorstehenden Ansprüche, wobei jedes Garn aus den mehreren textilen oder nichtmetallischen Filamenten eine Streckgrenze größer als 2000 MPa oder in einem Bereich von 2000 MPa bis 2500 MPa aufweist.

5. Wulst nach mindestens einem der vorstehenden Ansprüche, wobei jedes Garn aus den mehreren textilen oder nichtmetallischen Filamenten ein Elastizitätsmodul kleiner als oder gleich 300 MPa aufweist.

6. Wulst nach mindestens einem der vorstehenden Ansprüche, wobei ein Verhältnis einer Masse des Kerns (230, 330) zu einer Masse der gesamten Wulst (220, 320) kleiner als 0,6 oder in einem Bereich von 0,4 bis 0,6 liegt.

7. Wulst nach mindestens einem der vorstehenden Ansprüche, wobei das Verhältnis der Reißkraft des Kerns (230, 330) zu der Reißkraft der gesamten Wulst (220, 320) größer als oder gleich 0,25 ist.

8. Wulst nach mindestens einem der vorstehenden Ansprüche 1 bis 6, wobei ein Beitrag des Kerns (230, 330) zu einer Reißkraft der gesamten Wulst (220, 320) zwischen 5 Prozent und 60 Prozent, vorzugsweise zwischen 5 und 30 Prozent liegt.

9. Wulst nach mindestens einem der vorstehenden Ansprüche, wobei das Verhältnis der Masse des Kerns (230, 330) zu der Masse der gesamten Wulst (220, 320) größer als oder gleich 0,05 ist.

10. Wulst nach mindestens einem der vorstehenden Ansprüche, wobei ein Verhältnis des Durchmessers des Kerns (230, 330) zu einem Durchmesser der gesamten Wulst größer als oder gleich 0,4 ist.

11. Wulst nach mindestens einem der vorstehenden Ansprüche, wobei der Kern (230, 330) eine Bruchfestigkeit von größer als oder gleich 200 MPa aufweist.

12. Wulst nach mindestens einem der vorstehenden Ansprüche, wobei ein Durchmesser jedes Garns aus den mehreren textilen oder nichtmetallischen Filamenten in einem Bereich von 0,5 mm bis 6,0 mm liegt und/oder wobei ein Durchmesser jedes Elementarfilaments aus den mehreren textilen oder nichtmetallischen Filamenten in einem Bereich von 2,0 µm bis 30,0 µm liegt.

13. Wulst nach mindestens einem der vorstehenden Ansprüche, wobei jedes Filament des Garns aus mehreren textilen oder nichtmetallischen Filamenten fortlaufend ist und/oder wobei jedes Garn aus mehreren textilen oder nichtmetallischen Filamenten mehr als zehn Elementarfilamente einschließt.

14. Wulst nach mindestens einem der vorstehenden Ansprüche, wobei jedes Filament des Garns aus mehreren textilen oder nichtmetallischen Filamente aus einer Gruppe von Filamenten ausgewählt ist, bestehend aus Glasfilamenten, Kohlenstofffilamenten, Polyphenylenbenzobisoxazol(PBO)filamenten, Siliziumdioxidfilamenten, Keramikfilamenten, und Mischungen davon; und/oder wobei jedes Garn aus mehreren textilen oder nichtmetallischen Filamente aus einer Gruppe von Fasern ausgewählt ist, bestehend aus Glasfasern, Kohlenstofffilamenten, Polyphenylenbenzobisoxazol (PBO), Siliziumdioxidfasern, Keramikfasern, und Mischungen davon.

15. Reifen, wie etwa ein Luftfahrzeugreifen (10), umfassend mindestens eine Wulst (220, 320) nach mindestens einem der vorstehenden Ansprüche.

## Revendications

1. Talon destiné à un bandage pneumatique, le talon (220, 320) comprenant une tringle de talon (230, 330) qui englobe au moins un fil qui est constitué par un certain nombre de filaments textiles ou non métalliques qui sont enrobés d'une matrice organique, la tringle de talon possédant un diamètre qui se situe dans une plage allant de 5,0 mm à 30,0 mm, en variante dans une plage allant de 5,0 mm à 20,0 mm, et une couche externe (240, 340) faisant office de gaine qui englobe au moins un fil métallique qui est enroulé autour de la tringle de talon (230, 330) et qui vient se mettre en contact avec cette dernière, **caractérisé en ce que** la matrice organique possède une masse volumique qui se situe dans une plage allant de 0,5 g/cm³ à 2,00 g/cm³, en variante de 0,9 g/cm³ à 2,00 g/cm³.

2. Talon tel qu'il est représenté dans la revendication 1, dans lequel le talon (230, 330) englobe un fil unique constitué par lesdits plusieurs filaments textiles ou non métalliques ou est constitué par le fil unique en question.

3. Talon tel qu'il est représenté dans la revendication 1, dans lequel le talon (230, 330) englobe un certain nombre de fils séparés constitués par lesdits plusieurs filaments textiles ou non métalliques ou est constitué par lesdits plusieurs fils séparés en question.

4. Talon tel qu'il est représenté dans au moins une des revendications précédentes, dans lequel chaque fil constitué par lesdits plusieurs filaments textiles ou non métalliques possède une limite d'élasticité conventionnelle qui est supérieure à 2000 MPa ou bien qui se situe dans une plage allant de 2000 MPa à 2500 MPa.

5. Talon tel qu'il est représenté dans au moins une des revendications précédentes, dans lequel chaque fil constitué par lesdits plusieurs filaments textiles ou non métalliques possède un module de Young qui est inférieur ou égal à 300 GPa.

6. Talon tel qu'il est représenté dans au moins une des revendications précédentes, dans lequel un rapport d'une masse de la tringle de talon (230, 330) à une masse du talon (220, 320) dans sa totalité est inférieur à 0,6 ou se situe dans une plage allant de 0,4 à 0,6.

7. Talon tel qu'il est représenté dans au moins une des revendications précédentes, dans lequel le rapport de la force de rupture de la tringle de talon (230, 330) à la force de rupture du talon (220, 320) dans sa totalité est supérieur ou égal à 0,25.

8. Talon tel qu'il est représenté dans au moins une des revendications 1 à 6, dans lequel une contribution de la tringle de talon (230, 330) à une force de rupture du talon (220, 320) dans sa totalité représente entre 5 % et 60 %, de préférence entre 5 % et 30 %.

9. Talon tel qu'il est représenté dans au moins une des revendications précédentes, dans lequel le rapport de la masse de la tringle de talon (230, 330) à la masse du talon (220, 320) dans sa totalité est supérieur ou égal à 0,05.

10. Talon tel qu'il est représenté dans au moins une des revendications précédentes, dans lequel un rapport du diamètre de la tringle de talon (230, 330) à un diamètre du talon dans sa totalité est supérieur ou égal à 0,4.

11. Talon tel qu'il est représenté dans au moins une des revendications précédentes, dans lequel la tringle de talon (230, 330) possède une résistance à la traction ultime qui est supérieure ou égale à 200 MPa.

12. Talon tel qu'il est représenté dans au moins une des revendications précédentes, dans lequel un diamètre de chaque fil constitué par lesdits plusieurs filaments textiles ou non métalliques se situe dans une plage allant de 0,5 mm à 6,0 mm et/ou dans lequel un diamètre de chaque filament élémentaire parmi lesdits plusieurs filaments textiles ou non métalliques se situe dans une plage allant de 2,0 µm à 30,0 µm.

13. Talon tel qu'il est représenté dans au moins une des revendications précédentes, dans lequel chaque filament élémentaire du fil faisant partie desdits plusieurs filaments textiles ou non métalliques est continu et/ou dans lequel chaque fil constitué par lesdits plusieurs filaments textiles ou non métalliques englobe plus de 10 filaments élémentaires.

14. Talon tel qu'il est représenté dans au moins une des revendications précédentes, dans lequel chaque filament du fil constitué par lesdits plusieurs filaments textiles ou non métalliques est choisi parmi un groupe de filaments qui est constitué par des filaments de verre, des filaments de carbone, des filaments de polyphénylène benzobisoxazole (PBO), des filaments à base de silice, des filaments à base de céramique, ainsi que leurs mélanges ; et/ou dans lequel chaque fil constitué par lesdits plusieurs filaments textiles ou non métalliques est choisi parmi un groupe de fibres constitué par des fibres de verre, des fibres de carbone, des fibres de polyphénylène benzobisoxazole (PBO), des fibres à base de silice, des fibres à base de céramique, ainsi que leurs mélanges.

15. Bandage pneumatique tel qu'un bandage pneumatique destiné à un aéroplane (10) qui comprend au moins un talon (220, 320) en conformité avec au moins une des revendications précédentes.
